# EUROPEAN PATENT SPECIFICATION

(11) **EP 2 840 766 B1**
(45) Date of publication and mention of the grant of the patent: **05.04.2017**
(21) Application number: 13181263.8
(22) Date of filing: 21.08.2013
(51) Int. Cl.: H04M 3/38, H04M 3/42

(54) **Method for trusted communication and communication system allowing trusted communication**
Verfahren zur sicheren Kommunikation und Kommunikationssystem zur sicheren Kommunikation
Procédé de communication de confiance et système de communication permettant une communication de confiance

(43) Date of publication of application: 25.02.2015
(73) Proprietor: Blessing, Werner, 6048 Horw (CH)
(72) Inventor: Blessing, Werner, 6048 Horw (CH)
(74) Representative: Rutz & Partner

(56) References cited:
- EP-A1- 2 515 497
- WO-A2-2006/076347
- CA-A1- 2 531 431

## Description

### TECHNICAL FIELD

The present invention relates to a method for trusted communication and to a communication system allowing trusted communication.

### BACKGROUND OF THE INVENTION

Nowadays goods and services provided by service providers, such as banks or warehouses, are typically ordered online based on the support of a communication system that provides secure communication lines. Hence, data can securely be exchanged between the parties. Typically, transactions are completing by transferring credit card details that are verified by the service provider. A further trust is not required and not provided by this system.
[1], US2011/0035294A1, discloses a server with a protocol that automates transactions involving a customer and a merchant agreeing to trade money in the customer's account for goods or services available from the merchant. The protocol protects personal identifying information of the customer from disclosure to the merchant, and protects all parties from repudiation of the specific transaction. The protocol defines a pre-authenticated form of the specific transaction; obtains authorization from the customer and the merchant to commit on their behalf to the pre-authenticated transaction; and obtains authorization from the bank to commit resources for settlement with the merchant. After obtaining authorizations, a transaction clearance code is generated completing a record of the pre-authenticated transaction for non-repudiation, for proof of a right to receive settlement from the third party and for proof of a right to receive the goods or services from the merchant.

The protocol uses a server for obtaining commitments from the first, second and third parties to a specific transaction in which transaction parameters are arranged between the first and second parties. The protocol defines a pre-authenticated form of the specific transaction, obtains authorization from the first and second parties for the server to commit on behalf of the first and second parties to the specific transaction in the pre-authenticated form, and obtains authorization from the third-party for the server to commit, on behalf of a third-party, resources for settlement of the specific transaction in the pre-authenticated form with the second party. After obtaining authorizations from all three parties, the server generates a one-time transaction clearance code unique to the specific transaction. The transaction clearance code is delivered to the parties. The transaction clearance code is usable by the second party to prove a right to receive resources to settle the transaction from the third party. The transaction clearance code is also usable by the first party to prove a right to receive the goods or services specified in the pre-authenticated transaction from the second party. A record of the transaction is maintained by the server, usable to prevent repudiation of the transaction by any party. Under this protocol, the second party need not receive any personal identifying information about the first party, while being able to execute a transaction which cannot be repudiated by the first party or by its bank.

Hence, this method involves various steps causing a burden on the related parties and requires a rather complex system.

As described in [2], US8510817B1, with the widespread use of the Internet, attempts to defraud people have also increased. Two prevalent fraud attempts are phishing and man-in-the-middle (MITM) attacks. Phishing involves the non-real-time collection of usernames and passwords and other sensitive data. These data could later be used by an imposter to defraud users by executing a MITM attack.
[3], US8370262B2, relates to a method for performing secure online transactions that involves strong authentication of a user while avoiding the risk of pishing and MITM attacks. This system uses authentication by advanced challenge response procedures while preventing third parties from getting access to the challenge information so that an imposter cannot exploit challenge information for generating a response that is forwarded fraudulently to the publication system. This system can also be enhanced for the purpose of mutual authentication of two parties that are planning a transaction. Hence, this method is a strong tool for performing trusted communication. However, the method disclosed in [3] is limited to the exchange of data that are required for performing business transactions. This method therefore provides high-level security for business transactions according to the current formal requirements.

These formal requirements which require written declarations of intent have become a standard, since contracts closed according to these standards, supported by strong authentication as disclosed in [3], exclude the problem of illegal repudiation of an agreement.

These formal requirements create a burden to the users and offer little flexibility. Particularly in business transactions that require immediate decision and reaction, these time-consuming methods are scarcely applicable. E.g., transactions of members of the stock market are exposed to a doubled risk, namely the risk of the transaction itself and the later repudiation of the agreement by the contractual partner. Consequently, rather informal contractual actions, such as oral transactions executed by stock market brokers are exposed to undesirable legal risks.

While high-level transactions, such as the transactions executed by stock market brokers, are in the focus of security considerations, there is generally a plethora of low-level or medium-range transactions in daily business proceedings, for which prove of existence and/or confirmation should be available when required.

E.g., according to the Swiss Code of Obligations, § 11, the validity of a contract is not subject to compliance with any particular form unless a particular form is prescribed by law. Hence, for contractual partners, it would be desirable to close contracts with the least burden of formalities, while a high level of security is maintained.

Further,
[4], EP2515497A1, discloses a method for authenticating users in a distributed network, allowing authenticated users to access decentralised service providers after having performed authentication at a centralised authentication server.
[5], US2007165826A1, discloses a telecommunication network comprising a plurality of stacked private or company networks, a private automatic branch exchange, and an emergency call center. A company network is often a set of interconnected private automatic branch exchanges offering particular services based on specific protocols. Each terminal of said network has access to certain services according to an authorization table situated in the private automatic branch exchange to which the terminal is connected, that table or a table portion being specific to that terminal. Subject to authorization, any terminal of this network can activate all the services on each of the private automatic branch exchanges of the network concerned, provided that this is allowed by its own performance, the routing rules, and the configuration data for the private automatic branch exchanges. Activation by a terminal attached to a first private automatic branch exchange of the services offered by a second private automatic branch exchange of the same company network is made possible by sending information over lines connecting the various private automatic branch exchanges of the company network in accordance with proprietary or standardised signalling protocols. Hence a user can access services, typically enhanced telecommunication services, of the telecommunication network. As described in [5], users who have a common commercial interest may benefit from this system.

In [5], it is further disclosed that the network is also applicable to the field of emergency call centers that are intended to receive emergency telephone calls made in a given region. Telephone calls to a generic number (112 in Europe, 911 in the USA) are automatically routed to an emergency call center dedicated to the region concerned. Based on the terminal's line number communicated with the call the call center uses a database to determine the location of the calling party.

Hence, the system disclosed in [5] provides enhanced telecommunication services, which are however assigned to the terminals of the network. Consequently, a person using that terminal gets access to the services regardless of his identity. This is often uncritical, since the terminals of a company network are usually firmly assigned to specific employees. Furthermore, unauthorised use of a telecommunication service, e.g. for calling a party abroad, does not cause costs, which would justify high-level security measures.

Still, particularly in emergency call systems, it would be highly undesirable if an unauthorised person would cause costly actions by fraudulent use of a terminal to which high-level services are assigned.

CA2531431A1 discloses a method, system and an apparatus for communicating data associated with a user of a voice device, which enable organizations such as businesses, correctional facility authorities or the like to control outbound calls from their facilities based on the data associated with the user of the voice device.

### SUMMARY OF THE INVENTION

It is therefore an object of the present invention to provide an improved method and a communication system that allow trusted communication between two or more parties over a telecommunication network.

In particular the inventive method shall allow two or more parties to negotiate and execute a transaction, a contract or an agreement without the burden of formalities.

The inventive method shall allow the users of a communication network that preferably incorporates one or more company networks, to exchange data in any form, particularly data of oral communication, across the network without a risk of repudiation of receipt of the data by one of the users.

Consequently the inventive communication system shall provide enterprises and business partners a new or strongly improve tool for negotiating and informally closing contracts while excluding the problem of illegal repudiation.

Furthermore, the inventive method shall support scalability of the transactions and, accordingly, the security level in such a way that low-level transactions and agreements, such as a simple order to an employee, or high-level transactions, such as transactions on the stock market, can securely be executed.

Consequently the inventive communication system shall be adaptable with minimal efforts to different security levels or given circumstances such as time, date, the level of urgency or the value of the transactions.

Still further, the system shall facilitate documentation of the negotiations and their results.

Furthermore, the inventive method shall protect users of the inventive communication system from being contacted by third parties, with which negotiations are not desirable.

Further, the inventive method shall allow implementing general rules and policies defined by the operator of the inventive communication system, e.g. the employer of the users of the communication system with utmost flexibility, preferably allowing implementation of security policies down to any single user of the trusted communication system.

The inventive method shall be applicable in standard telecommunication networks, in connection oriented or in connectionless networks, particularly in telecommunication networks incorporating one or more company networks that are equipped with private branch exchanges.

### SUMMARY OF THE INVENTION

The above and other objects of the present invention are achieved by a method and a communication system according to claim 1 and 12 respectively. Further preferred embodiments of the invention are defined independent claims.

The method allows trusted communication in a communication system that comprises a telecommunication exchange, such as a private branch exchange, that, in response to a setup request received from a calling party, provides switching functions for establishing a call connection between at least a first and a second terminal through which connection the related parties can negotiate and execute transactions.

According to the invention, based on a setup request received from a calling party, the telecommunication exchange, which comprises a call control unit and a switching unit, forwards a calling party address and a called party address, that were extracted from the setup request, to an authentication server, which stores at least one data record for the calling party address and/or the called party address in a memory unit or database that contains
a) a current trust level assigned to the calling party and/or the called party, which trust level has previously been determined by authenticating the calling party and/or the called party; and
b) at least one required trust level for the calling party and/or the called party.

Accordingly the authentication server compares the current trust level of the calling party and/or the called party with the at least one required trust and the telecommunication exchange establishes the requested call connection, if the authentication server has reported that the current trust level exceeds the required trust level of the calling party and/or the called party.

In the event that the current trust level is above a required trust level then the system assumes that the calling party and/or the called party are correctly authenticated. Consequently trusted communication can take place between both parties with all related advantages, which are detailed below.

In preferred embodiments the related data record further contains at least one communication rule assigned to the calling party and/or the called party. Based on the received calling party address and the called party address the authentication server
a) retrieves the related at least one communication rule;
b) selects a "required trust level" according to the retrieved communication rule from a group of different trust levels relating to specific security levels;
c) compares the current trust level of the calling party and/or the called party with the selected required trust level; and
d) forwards the result of the result of the comparison to the telecommunication exchange.

According to the communication rules the calling party and the called party can be authenticated as required by the given requirements and circumstances.

In a further preferred embodiment, the telecommunication exchange uses a call agent for interacting with the calling party and/or the called party preferably over a signalling channel in order to obtain call information, including at least one of the following information elements or combinations thereof
a) a request for trusted communication; or
b) a request for documented communication; or
c) a request for contractual communication; or
d) a request for certified communication; or
e) a request for non-binding communication; or
f) transaction data, particularly transaction value.

Interaction of a call agent with calling parties is for example known from [6], US4782510A. This document discloses a telephone answering machine with digital storage of announcements and messages and enhanced message playback features. When an incoming call is detected the line is seized and a predetermined outgoing message is placed upon the telephone line. The outgoing message prompts the calling party to provide a telephone number, a priority code, or other information which can be input via a telephone DTMF keypad. Hence, e.g. with a key telephone system, the calling party can enter commands with the keys of the telephone terminal in order to forward the requested information elements. In advanced systems, the terminal may be a multimedia computer system, e.g. a notebook or a tablet computer, on which a menu is presented that allows the calling party to select preferences e.g. by mouse clicks. The menu points may lead the calling party to text files with explanations of the available options.

Based on the received information elements the communication rules and/or the communication mode are selected accordingly. E.g., for a specific calling party and specific requests from this calling party a related communication rule may be selected and applied. This communication rule may define all available parameters, such as the required trust levels for the calling party and the called party, the security level of the established call connection, as well as management and archiving of the established call as detailed below.

In preferred embodiments the calling party and/or the called party, i.e., the users of the trusted communication system, may individually select store individual communication rules, which shall be applied for their communications. A user may for example create a first set of rules for calling parties assigned to the keys of the telecommunication terminal, a second set of rules for members of the marketing department, a third set of rules for members of the R&D department, a fourth set of rules for members of a partner company, and a fifth set of rules for third parties. Furthermore, a user may assign individual rules to contacts listed in a database.

The communication rules define the conditions to be met for establishing a call connection; particularly the trust levels required for all parties of a call, such as a call between two parties or a conference call.

The user can define communication rules for incoming and outgoing calls, each for the calling parties and the called parties that are preferably stored in a database of the telecommunication terminal. Hence, the communication terminal can be a conventional terminal or an intelligent terminal, such as a computer system that communicates across a conventional communication network or across an IP-network, such as an intranet or the Internet. Hence, any local or global telecommunication operator that uses conventional communication networks or IP-networks can incorporate the inventive solution into his communication system.

For incoming calls, the user can set the trust levels required for the calling party according to his requirements. The user can set requirements for people he can identify by hearing their voices to a low level. For members of the same company the user does not personally know, he can set the required trust level into the mid-range. For business partners with whom transactions and contracts are negotiated the required trust level can be set to maximum values.

At the same time the user can set the required trust level for the called party, i.e. the user himself, to a desired level. Typically for communications with business partners the user would increase the required trust level. These measures yield various benefits typically in conjunction with further inventive measures described below.

The user can prevent calls from third parties with whom a communication is undesirable. E.g., calls from sales agents would be barred. Calls from third parties with whom a communication would be desirable, can be lifted to a desired trust level. Authentication of both parties would mutually provide the required trust for important negotiations. Furthermore, as detailed below authentication would allow closing and documenting legally binding agreements.

For outgoing calls the user may desire to define different communication rules. E.g., the user may define that the required trust level for called parties shall be higher in general. In this way the user, e.g. a stockbroker, can be sure that fraudulent calls cannot be initiated from his telecommunication terminal.

Further authentication of the calling party or the called party may advantageously involve identification of the individual that is using the telecommunication terminal. Communication systems are often used 24 hours a day, e.g. by international traders or stockbrokers. Hence, telecommunication terminals may be used in different working shifts by different personnel. Consequently, assignment of executed transactions to a responsible employee may create problems. For this purpose, for a telecommunication terminal or telecommunication address, different records may be maintained by the authentication server.

Particularly for outgoing calls it is of great benefit for a company to identify the calling party by means of data records that are individually assigned to multiple users. Identification procedures may take place generally or only then, when the terminal has been marked in the telecommunication exchange as a multi-user terminal. Identification of an individual out of a user group may involve any kind of authentication, preferably biometric authentication. It is checked whether the proof provided by the calling party matches with data, such as biometric data, of one of the registered users in order to identify the member.

Further, in preferred embodiments the operator of the communication network, e.g. an enterprise, defines and enforces global communication rules, for example general authentication requirement for a specific group of employees. An operator that is active in the stock market can define that for all stock brokers or terminals used by stock brokers, only trusted communication shall be implemented.

In the most preferred embodiment, biometric authentication of the calling party and/or the called party is performed according to a desired level with a mono modal or multi-modal biometric system such as the ones using challenge response procedures disclosed and referenced in [3]. With biometric authentication highest trust levels can be reached. For the purpose of biometric authentication registration procedures are performed by
a) authenticating a user of the communication system based on credentials presented and
b) capturing biometric data from the user for at least one biometric characteristic and
c) storing the captured biometric data in a database. Further, for performing biometric authentication during call setup procedures,
d) biometric data of the calling party or the called party are captured online;
e) captured biometric data are compared with biometric data retrieved from the database; and
f) authentication procedures are concluded by deciding whether the biometric data match and the calling party or called party is in fact the registered user.

Authentication of the calling party and/or the called party is performed according to the communication rules and can take place
a) before establishing a call connection or during the period in which the connection is established, or
b) if the current trust level is below the required trust level.

After completing the authentication procedures the current trust level of the authenticated user is updated. Since it is desirable, that the users have the highest possible trust level, authentication procedures can take place whenever possible and with whatever prove or information available. In advantage of the inventive system is that the users can be authenticated whenever the communication takes place without even being noticed by the users.

The trust level is preferably maintained for a plurality of sessions since a strong binding of the user to the telecommunication terminal is assumed. Entering into a further session may therefore be initiated without or simple security measures, such as entering a password. However, for high-level transactions it may be required to establish a required current trust level for every session.

In a preferred embodiment the determined current trust level is stored together with a timestamp and reduced steadily or stepwise according to a predetermined scheme that represents the expected loss of trust in time.

In further preferred embodiments, the inventive method comprises the steps of recording data related to the established call, including at least one of the following information elements or combinations thereof, namely
a) the time and date the call was set up and/or terminated;
b) the type of communication, such as trusted communication;
c) the parties participating in the call, preferably with name, capacity, employer, entitlement and location;
d) the subject of the call such as the involved transaction or contract;
e) the exchanged data, such as data relating to written or oral communication; and/or
f) electronic signatures of at least one party.

Hence, all information related to the call, particularly all technical information relating to the call setup and termination, and all information related to the trusted communication, particularly all commercially and legally relevant information, can be documented.

Based on trusted communications executed and related data recorded, the communication system preferably automatically issues certified or non-certified communication reports, e.g. upon request of a party that has participated in the call or by a legal authority.

The inventive communication system and method, as briefly described above, allow trusted communication and provides an archive with evidence for trusted communication so that repudiation of agreements and contracts is excluded. The inventive communication system therefore allows recording and documenting contractual negotiations and reducing possible "faults in the conclusion of a contract" (Culpa in contrahendo). Since negotiations are documented and certified, evidence results that leads the parties to conclude flawless contracts or allows correction of flawed contracts. In the event that questions arise regarding the meaning of a clause of a contract, the history of the contract is documented by the inventive communication system. Users of the inventive communication system may therefore generally use the communication system for any negotiation. Business partners may even use the inventive communication system for negotiations that take place in a conference room with all contractual parties present. Business partners present in the same conference room would therefore establish a connection with the communication system. According to the communication rules selected, the business partners would be authenticated before the connection would be set up. For this purpose the business partners would use their telecommunication terminals, such as mobile station. Alternatively the business partners could use terminals, preferably key terminals, provided in the conference room that are firmly attached to the communication system. With a routine provided by the communication system a business partner can enter his E.164 telecommunication address into the assigned terminal as an alias address. The number <YYYYYY> originally assigned to this terminal would be changed to the E.164 telecommunication address <XXXXXX> of the business partner. Subsequently, for a call originating from this terminal the calling party number would be <XXXXXX> allowing the authentication server to retrieve the data records related to this number <XXXXXX>. Consequently, the business partner could be authenticated not only by using his own mobile station but also by using a communication terminal provided in the conference room.

The private branch exchange of the company or enterprise can therefore serve as an authentication and documentation system for any telephone conference or business meeting. Of course, the inventive communication system can provide trusted and documented communication at lower and higher levels of importance. Communications with employees can automatically be documented. E.g., a request of the head of R&D to a project group will be documented and can later be retrieved by the parties. Of course, trusted communication is not limited to voice communication but can include multimedia communication. Hence, the inventive method and communication system provide a scalability that supports archiving of any business activities starting from basic processes, such as organisational processes, R&D processes, production processes or marketing processes up to high-level transactions between enterprises.

Furthermore, the inventive communication system could be extended to a network with a plurality of public or private exchanges that preferably use a common database, which contains the data of all registered users.

The inventive communication system or parts thereof, e.g. the authentication server, could also be operated under the control of a trusted third party.

### BRIEF DESCRIPTION OF THE DRAWINGS

Some of the objects and advantages of the present invention have been stated, others will appear when the following description is considered together with the accompanying drawings, in which:
- Fig. 1: shows an inventive communication system that allows trusted communication of two or more users with one another;
- Fig. 2: shows the setup of the communication system of figure 1 and the process of trusted communication between two users or subscribers 1X, 1Y; and
- Fig. 3: shows a part of the communication procedure shown in figure 2 under typical conditions.

### DETAILED DESCRIPTION OF THE PREFERRED EMBODIMENTS

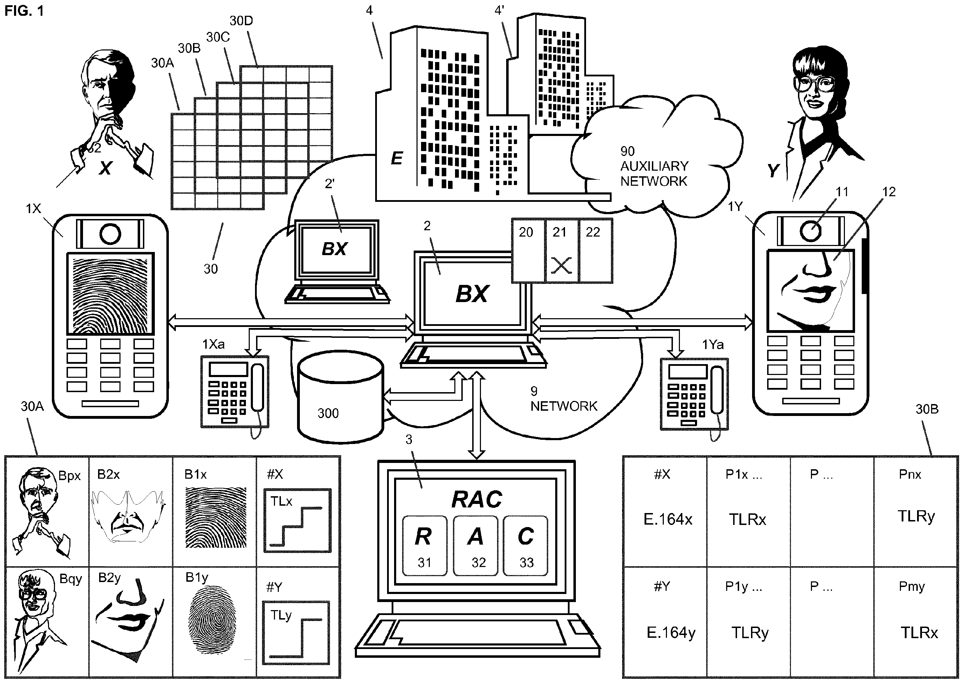

Fig. 1 shows an embodiment of an inventive communication system with a private or public telecommunication exchange 2 (or BX for biometric exchange) comprising a call control unit 20, a switching unit 21 and optionally a call agent 22. The telecommunication exchange 2 is embedded in a connection oriented or a connectionless network 9 that may interact with other networks, such as auxiliary network 90, e.g. a mobile communication network through which mobile stations get access to the telecommunication exchange 2. Further, the telecommunication exchange 2 may interact with other telecommunication exchanges 2' and use a common database 300. Typically, large enterprises E or governmental departments 4 would use private branch exchanges 2, 2' which together with the related network 9 would constitute an inventive communication system. The users of the enterprises E or governmental departments 4, 4' would be registered at the inventive communication system with user data stored in the database 300.

Access to the communication system 2 is provided for any communication terminal, preferably multimedia terminals, such as modern mobile stations 1X, 1Y or fixed stations 1Xa, 1Ya, e.g. key terminals, such as key terminals used by stock brokers.

Figure 1 shows two mobile stations 1X, 1Y of the related users X and Y, for which a connection has been established across the inventive communication system.

In preferred embodiments, the user X and Y can transfer their E.164 telecommunication addresses from their mobile stations 1X, 1Y to assigned key terminals 1Xa, 1Ya, which offer a routine for accepting an alias address that is communicated to the telecommunication exchange 2. Methods for the assignment of telephone numbers are known from [7], US7013132B2, and [8], US2008198987A1. With these known methods a subscriber can hide his true telephone number and use an alias number instead. The inventive method is targeted to the contrary - subscribers using the alias method intend to disclose their true identity on any telecommunication terminal so that trusted communication can take place in a standard fashion in any situation of the business partners and in any configuration of the inventive communication system.

Subscriber X may use his telecommunication terminal 1X outside the office. Inside the office subscriber X may prefer to use an executive key terminal 1Xa, in which the E.164 address of his mobile station 1X can be programmed.

Alternatively, if subscribers X, Y meet in a conference room that is provided with key terminals 1Xa, 1Ya that are attached to the inventive telecommunication exchange 2, then the subscribers X, Y can transfer their individual E.164 addresses to these terminals 1Xa, 1Ya. Afterwards a connection can be established that allows trusted communication according to the invention with the purpose of authenticating the members of the conference and to record conference information as defined by the parties.

Hence the inventive communication system can be used for trusted communication between parties that are located in distributed places or at the same place.

According to the invention, for setting up a call connection required for trusted communication a setup request is forwarded from one of the terminals 1X, 1Y (or the alias terminals 1Xa, 1Ya) to the telecommunication exchange 2. In response to the setup request the telecommunication exchange 2 provides call control functions and switching functions for establishing a call connection between the calling party and the called party or a conference call with three or more parties according to the inventive method. Hence, for each party a requested trust level is determined and compared with the current trust level.

For call setup procedures the call control unit 20 extracts the calling party address and/or the called party address from the setup request, which is defined in [9], ITU-T Q.931 Recommendation (05/98), chapter 3.1.14, page 21.

The extracted addresses are then forwarded to an authentication server 3 (or RAC) which in this preferred embodiment provides registration functionality 31 (or R), authentication functionality 32 (or A) and archiving plus certification functionality 33 (or C).

The authentication server 3 stores data of users, particularly of the calling party and the called party, that have been registered at the inventive communication system. The authentication server 3 therefore stores specific data including the identity for a registered users in at least one data record that are related to a unique identifier of each user, such as the user's unique E.164 number.

The data record contains at least
a) at least one current trust level TLx; TLy assigned each to the calling party and/or the called party, which trust level TLx; TLy has previously been determined by authenticating the calling party and/or the called party; and
b) at least one required trust level TLRx; TLRy assigned to the calling party and/or the called party.

The authentication server 3 then compares the current trust level TLx, TLy of the calling party and/or the called party with the or the selected required trust level TLRx; TLRy and forwards the result of the comparison to the telecommunication exchange 2.

Based on the results reported, the telecommunication exchange 2 establishes the requested call connection, if the authentication server 3 has reported that the current trust level TLx, TLy exceeds the required trust level TLRx; TLRy of the calling party and/or the called party.

Consequently, a call is only then set up, if the calling party X and/or the called party Y have been authenticated, as defined by communication rules that are discussed below.

In the event that a plurality of users use a single terminal attached or attachable to telecommunication exchange 2, then the authentication server 3 preferably stores data records for each user assigned to the address of this terminal, e.g. an E.164 address. In the event that stock brokers work in three shifts, then a group of three stock brokers may share a single terminal. The authentication server 3 is therefore given information that allows identification of the current user. The user is for example providing biometric data such as a fingerprint captured on the terminal. The terminal forwards the biometric data to the authentication server which compares the online captured biometric data with the biometric data captured during registration of the three users of the terminal. By comparing the captured biometric data with the registered biometric data, the current user is identified and authenticated. Consequently, transactions performed while using said terminal can be properly assigned to the identified user.

The provided biometric data is preferably used for increasing the current trust level TLx, TLy stored for the related user. Depending on the biometrics used a related increment will be applied to the recorded current trust level TLx, TLy.

Figure 1 shows that in this preferred embodiment the data records generated for the users are maintained in interrelated tables 30A, 30B of a database 300 that preferably is commonly used by all telecommunication exchanges 2, 2' embedded in the network 9.

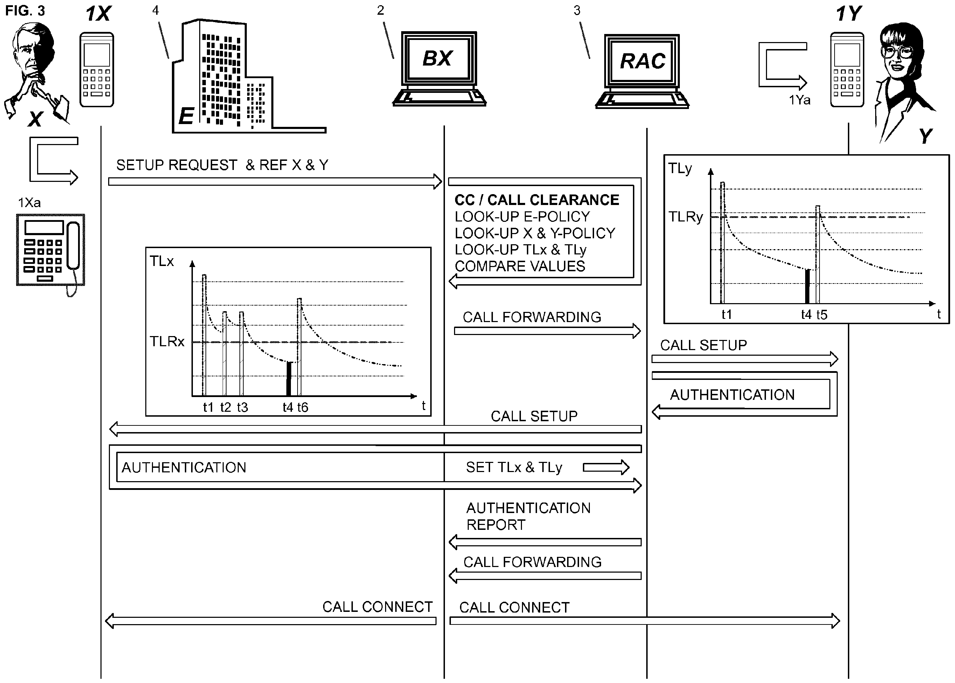

The extract of table 30A shows parts of the data records of users X and Y with biometric data B1x, B2x, ..., Bpx; B1y, B2y, ..., Bqy captured during registration of the users X and Y. Further stored in table 30A are the current trust levels TLx, TLy obtained for the users X and Y. The slope of the trust levels TLx, TLy function of time is shown in the diagrams of figure 3.

Still further, table 30A comprises an identifier #X, #Y for the users X and Y, preferably the unique E.164 numbers of the user terminals 1X, 1Y.

The data records of the users X and Y further comprise telecommunication rules P1x, ..., Pnx; P1y, ..., Pmy that are stored in a second table 30B, which also contains the identifiers #X, #Y. Tables 30A and 30B can therefore be linked with one another by means of the identifiers #X, #Y.

In a further table 30C, the operator of the communication system, e.g. an enterprise E, stores rules P1e, ..., Pne for individual users, groups of users or for all users. The enterprise can for example provide communication rules P1e, ..., Pne for a group of E.164 numbers, e.g. E.164x and E.164y. With the interrelated tables 30A, 30B, 30C all information required for call setup procedures is available to the telecommunication exchange 2 and the authentication server 3.

Using interrelated tables 30A, ..., 30D, or even more, allows efficient data handling. However, any other database technique could also be applied.

Although the shown system is split into several entities or modules, the inventive communication system can be further integrated or further be modularised. The telecommunication exchange 2 may incorporate for example the authentication server 3. Alternatively the registration module 31 shown as a part of the authentication server 3 can be implemented in a separate computer system. For example the registration authority and/or the authentication authority may be an independent trusted institution.

During registration the user is authenticated and then biometric data is captured from the user. The registration process can be guided by personnel or can be executed automatically from a remote terminal, for example with the support of a trusted institution using for example the principles of the private key infrastructure.

During registration various biometric characteristics can be captured that can be used for example for fingerprint recognition, voice recognition, face recognition, iris recognition or behaviour recognition. Related biometric data B1x, B2x, ..., Bpx; B1y, B2y, ..., Bqy for each user X, Y is stored in table 30A. Different biometric characteristics can be used independently or in combination. For the individual biometric characteristics and combinations thereof different trust level increments are assigned. Highest trust level increments can be achieved with a multimodal biometric authentication system that uses challenge response procedures as described in [3].

For this preferred authentication method, audio and video samples for various individual speech elements expressed by the end user are simultaneously captured and stored during enrolment of the end user. The speech elements are selected in such a way that they can be assembled to form any password or sentence. For authentication purposes such a password or sentence is forwarded to the user e.g. in form of a written challenge. When responding to this challenge, audio and video samples are simultaneously captured for the response of the user. Finally the actual response of the user and the challenge in form of correspondingly assembled speech elements are compared that were recorded during enrolment. In the event that the currently recorded and the previously stored and assembled biometric data match, then the user is positively authenticated. This method not only eliminates a relevant risk for MITM-attacks but also provides very strong authentication, because the response can be analysed and evaluated in various ways with reference to the retrieved and audio and video samples that have been assembled according to the current challenge. Further, coherence of the lip movements and the acoustical sounds can be examined. Overall, again with no additional burden for the end users, extremely strong authentication and thus highest trust level value is TLx, TLy can be reached.

This authentication is preferably executed with the support of the call agent. The call agent enquires for example, whether trusted communication is desired. Subsequently the agent prompts a challenge to the user. Consequently with almost no additional efforts the users can be authenticated within seconds. The obtained trust level TL is then compared to a required trust level TLR.

As briefly mentioned, the data records of the users preferably comprise communication rules P1x, ..., Pnx; P1y, ..., Pmy, with which the inventive call setup procedures are controlled, in order to reach a desired level of trust for the communication. Based on the on the calling party address and the called party address extracted from the setup request the related communication rules P1x, ..., Pnx; P1y, ..., Pmy are retrieved from the table 30B. According to the communication rules P1x, ..., Pnx; P1y, ..., Pmy the required trust levels TLRx; TLRy are selected. Then the current trust level TLx, TLy of the calling party and/or the called party is compared with the selected required trust level TLRx; TLRy.

The communication rules P1x, ..., Pnx; P1y, ..., Pmy may define further requirements, such as the security level of the established call connection or formal requirements, such as the requirement of exchanging signatures in order to validate a transaction.

In order to adapt the communication system to the requirements of the communication parties, the telecommunication exchange 2 preferably uses the call agent 22 for interacting with the calling party and/or the called party. Interaction can take place for example over a signalling channel.

The registration server further comprises a module 33 (or C) used for archiving and certification purposes. With this module data related to the established call are recorded and stored in table 30D. Accordingly, certified non-certified reports can be generated based on the recorded call details. Hence, the table 30D contains all formal evidence required for supporting the contracts closed and the transactions executed during communication.

The inventive method can also be used for trusted communication between machines, for which trust levels are established by providing proof, e.g. in form of secret data or in form of a certificate issued by the users. Communication and data are only accepted, if a sufficient trust level has been recorded and examined for the machines, e.g. data terminals or call agents.

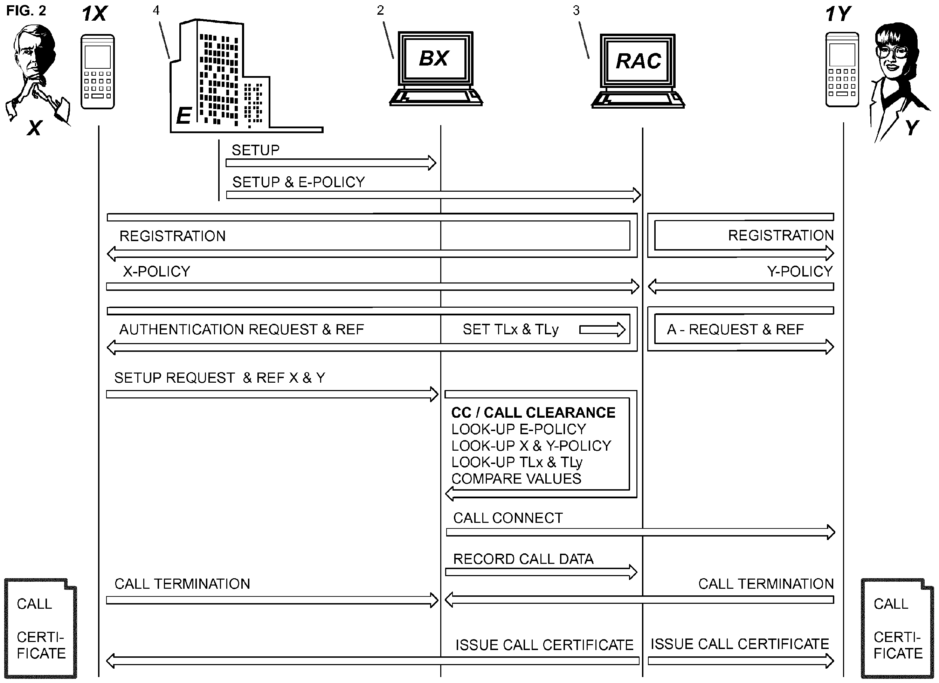

Figure 2 schematically shows the setup of the communication system of figure 1 as well as the process of trusted communication between two users or subscribers 1X, 1Y.

In a first step the operator 4 is setting up the telecommunication exchange 2 and the authentication server 3. For example based on a decision of the board of directors a new policy has been issued with new communication rules that are downloaded to the authentication server, i.e. into table 30C.

Later, new employees X and Y get registered with the inventive communication system and download communication rules according to their individual policies into table 30B.

The other morning, the employees X and Y request to get authenticated by the inventive system, so that a trust level TLx, TLy can be established. This authentication process can be performed by using for example the mobile station 1X, 1Y or a fixed station. Alternatively, the employees get authenticated when entering the building by an authentication terminal provided at the gate. After successful authentication the authentication terminal reports the result of the authentication to the authentication server 3, which increments the current trust level TLx, TLy in table 30A accordingly. Consequently, the communication system will automatically be set up in the morning, when the employees are arriving and get authenticated. In the event that an employee has not arrived in the morning, his telecommunication terminal will be locked and cannot be used by other parties, if the communication rules are set accordingly. Consequently the inventive communication system can be operated with minimal efforts. Further, with modern telecommunication terminals authentication can be performed without any burden to the user. A system that allows multimodal biometric authentication with minimal efforts is described for example in [10], EP2515500A1. Hence, the inventive method can be executed practically without additional burden to the user. Each time the employees using his terminal the current trust level TLx, TLy is incremented accordingly. In the end that an unauthorised person is using the employee's terminal the current trust level TLx, TLy would be decremented or deleted.

After the setup of the communication system, user X is forwarding a request for the setup of a call connection to user Y to the telecommunication exchange 2, which commences call clearance procedures and extracts and forwards the calling party address and the called party address to the authentication server 3.

The authentication server 2 retrieves the global and individual communication rules P1e, ..., Pne; P1x, ..., Pnx; P1y, ..., Pmy provided by the operator 4 and the users X and Y. According to the communication rules the required trust levels TLRx, TLRy are selected. Figure 1, table 30B shows that the data records of the users X and Y each comprise required trust levels TLRx, TLRy for both users X and Y. Accordingly the authentication server 3 or the authentication module 32 will compare the current trust levels TLx, TLy with the highest values of the required trust levels TLRx, TLRy to meet the highest requirements defined by both parties X and Y.

After the comparison of the current trust levels TLx, TLy with the required trust levels TLRx, TLRy the authentication server 2 returns the results to the telecommunication exchange 2 together with call parameters according to which the requested connection is set up. E.g., the call control module 20 uses the bearer capabilities of the network, e.g. an ISDN network, accordingly.

Further, for the established call data related to the call connection and the trusted communication executed across this connection communication are recorded as requested by one or both of the parties. For example, data of the communicating parties including the compared trust levels TLx, TLy and TLRx, TLRy, the voice data, possibly written data and images, are recorded and stored in table 30D shown in figure 1.

After termination of the call the call control unit 20 or the authentication server 2 issues a call certificate confirming all required details of the trusted communication, which has taken place.

Figure 3 shows a part of the communication procedure shown in figure 2 under typical conditions. First of all, it is illustrated that the users X and Y have transferred the E.164 numbers from their mobile stations 1X, 1Y to the key telephone stations 1Xa, 1Ya used in their offices or in a conference room that is used for negotiations. Hence, trusted communication takes place either across the established call connection or within the conference room directly between the parties, which both have been authenticated. In both cases, details of the established call, the authentication procedures and the trusted communication are automatically recorded.

Figure 3 illustrates that at time t4 a setup request is sent from terminal 1Xa to the telecommunication exchange 2. Again the call control module 20 commences call clearance procedures and sends the addresses of the parties to the authentication server 2, which retrieves the communication rules P1e, ..., Pne; P1x, ..., Pnx; P1y, ..., Pmy and accordingly selects the required trust levels TLRx, TLRy.

Then the authentication server compares the selected required trust levels TLRx, TLRy with the current trust levels TLx, TLy, which are shown in a first and a second diagram in figure 3. The first diagram shows the slope of the trust level TLx in function of the time with points in time t1, t2, t3, at which the user X had been authenticated.

At time t1 the user X had for example entered the company and had been authenticated at the entrance by an authentication terminal that communicates with the authentication server 3. Subsequently the trust value obtained there has been transferred to the inventive communication system and recorded in the database 300. At times t2 and t3, user X has used the key communication terminal 1X or 1Xa and has been authenticated by taking biometric data, such as characteristics of a fingerprint, of the ear, of the iris, of the face or of the voice. Accordingly the trust level TLx has been augmented each time by an increment corresponding to the strength of authentication. Between times t1, t2 and t3 the trust level has been reduced so that at time t4 the actual or current trust level TLx is far below the required trust level TLRx selected according to the communication rules.

Similarly, the second diagram shows that user Y has entered the company building at time t1 and has been authenticated and the obtained trust level TLy has been recorded. After time t1 the trust level has decayed so that at time t4 also the actual or current trust level TLy is below the required trust level TLRy, which in this case is considerably higher than the required trust level TLx.

In order to raise the trust level TLy of user Y, the authentication server 3 set up a call connection to the related terminal 1Y or the called party and requests the user Y to provide biometric data. For example the authentication server 2 forwards a motivation message stating that user X would like to enter trusted communication and that authentication would be required for this purpose.

After completion of authentication procedures, the new current trust level TLy is recorded. As shown in the second diagram the current trust level TLy is now exceeding the required trust level TLRy.

Since the requirements are met, an authentication report is sent to the telecommunication exchange 2 which then sets up the call as specified by the communication rules.

Call setup procedures for connection oriented systems is described for example in [11], Peter Bocker, ISDN - Digitale Netze für Sprach-, Text-, Daten-, Video- und Multimediakommunikation (ISDN - digital networks for voice-, speech-, text-, data-, video -, and multimedia communication), 4^{th} edition, Heidelberg 1997, page 127, see fig. 4.27).

Call set up procedures for connectionless systems is described for example in [12], Douglas E. Comer, INTERNETWORKING with TCP/IP, 4th edition, New Jersey 2000, chapter 29.10, pages 546 ff..

Consequently the inventive method can be implemented in any communication system that is capable of establishing a communication channel between two parties for forwarding any data in any format with any telecommunication terminal, such as smart phones, tablet computers, notebooks, including terminals with an autonomously operating intelligent module that is capable of automatically placing call requests and exchanging data.

### References

[1] US2011/0035294A1
[2] US8510817B1
[3] US8370262B2
[4] EP2515497A1
[5] US2007165826A1
[6] US4782510A
[7] US7013132B2,
[8] US2008198987A1
[9] ITU-T Q.931 Recommendation (05/98)
[10] EP2515500A1
[11] Peter Bocker, ISDN - Digitale Netze fur Sprach-, Text-, Daten-, Video- und Multimediakommunikation, 4th edition, Heidelberg 1997
[12] Douglas E. Comer, INTERNETWORKING with TCP/IP, 4th edition, New Jersey 2000

## Claims

1. Method for trusted communication in a communication system that comprises a telecommunication exchange (2), such as a private branch exchange, that, in response to a setup request received from a calling party, provides switching functions for establishing a call connection between at least a first and a second terminal (1X, 1Y) through which the related parties negotiate and execute transactions, wherein
the telecommunication exchange (2) forwarding a calling party address and/or a called party address that relates to the setup request, to an authentication server (3);
the authentication server (3) storing at least one data record for the calling party address and/or the called party address;
the related data record containing
a) at least one current trust level (TLx; TLy) assigned to the calling party and/or the called party, which trust level (TLx; TLy) has previously been determined by authenticating the calling party and/or the called party; and
b) at least one required trust level (TLRx; TLRy) assigned to the calling party and/or the called party;
the authentication server (3) comparing the current trust level (TLx, TLy) of the calling party and/or the called party with the at least one required trust level (TLRx; TLRy); and
the telecommunication exchange (2) establishing the requested call connection, if the authentication server (3) has reported that the current trust level (TLx, TLy) exceeds the required trust level (TLRx; TLRy) of the calling party and/or the called party.

2. Method according to claim 1, comprising the steps of the related data record containing at least one communication rule (P1x, ..., Pnx; P1y, ..., Pmy) assigned to the calling party and/or the called party and the authentication server (3), based on the calling party address and the called party address received,
a) retrieving the related at least one communication rule (P1x, ..., Pnx; P1y, ..., Pmy) ;
b) selecting the required trust level (TLRx; TLRy) according to the communication rule (P1x, ..., Pnx; P1y, ..., Pmy) ;
c) comparing the current trust level (TLx, TLy) of the calling party and/or the called party with the selected required trust level (TLRx; TLRy); and
d) forwarding the result of the result of the comparison to the telecommunication exchange (2).

3. Method according to claim 1 or 2, comprising the steps of the authentication server (3)
a) performing registration procedures by authenticating a user of the communication system based on credentials presented and capturing biometric data (B1x, ..., Bpx; B1y, ..., Bqy) for at least one biometric characteristic and storing the captured biometric data (B1x, ..., Bpx; B1y, ..., Bqy) in a database (30);
b) for performing biometric authentication, capturing biometric data of the calling party or the called party online; and
c) comparing the captured biometric data with biometric data (B1x, ..., Bpx; B1y, ..., Bqy) retrieved from the database (30) and checking whether the biometric data match.

4. Method according to claim 1, 2 or 3, comprising the steps of the authentication server (3)
a) storing one or more data records for a calling party address or a called party address, each containing information required for authentication, such as biometric data and the current trust level (TLx) of a potential user that uses said calling party address or called party address;
b) receiving proof, such as biometric data, captured online from the user;
c) identifying the user; and
d) if required by the communication rules (P1x, ..., Pnx), comparing the current trust level (TLx) of the identified user with the related required trust level (TLRx; TLRy).

5. Method according to one of the claims 1 - 4, comprising the steps of the authentication server (3) authenticating the calling party and/or the called party
a) before establishing a call connection or during the period in which the connection is established, or
b) if the current trust level (TLx, TLy) is below the required trust level (TLRx; TLRy).

6. Method according to one of the claims 1 - 5, wherein, communication rules (P1x, ..., Pnx; P1y, ..., Pmy) are defined for incoming and outgoing calls.

7. Method according to one of the claims 1 - 6, comprising the steps of determining the current trust level (TLx, TLy) together with a timestamp and reducing the current trust level (TLx, TLy) according to predetermined values representing the expected loss of trust in time.

8. Method according to one of the claims 1-7, comprising the steps of the calling party and/or the called party selecting and storing individual communication rules (P1x, ..., Pnx; P1y, ..., Pmy) and/or a system operator selecting and storing global communication rules (P1x, ..., Pnx; P1y, ..., Pmy) for calling parties and/or for called parties or groups thereof.

9. Method according to one of the claims 1 - 8, comprising the steps of the telecommunication exchange (2) using a call agent (22) for interacting with the calling party and/or the called party in order to obtain call information, including at least one of the following information elements or combinations thereof
a) a request for trusted communication; or
b) a request for documented communication; or
c) a request for contractual communication; or
d) a request for certified communication; or
e) a request for non-binding communication; or
f) transaction data, particularly transaction value;
and selecting communication rules (P1x, ..., Pnx; P1y, ..., Pmy) accordingly.

10. Method according to one of the claims 1 - 9, comprising the steps of recording data related to the established call, including at least one of the following information elements or combinations thereof
a) time and date;
b) the type of communication;
c) the parties participating in the call, preferably with name, capacity, employer, entitlement and location;
d) the subject of the call such as the involved transaction or contract;
e) the exchanged data, such as data relating to written or oral communication; and/or
f) the electronic signatures of at least one party.

11. Method according to one of the claims 1 - 10, comprising the steps of archiving and issuing certified or non-certified communication reports upon request of a party that has participated in the trusted communication or by a legal authority.

12. Communication system with a telecommunication exchange (2), such as a private branch exchange with a call control unit (20) and a switching unit (21), that, in response to a setup request received from a calling party, provide call control functions and switching functions for establishing a call connection between at least a first and a second terminal (1X, 1Y) through which the related parties negotiate and execute transactions, which communication system is designed to operate according to a method as defined in one of the claims 1-11.

13. Communication system according to claim 12, wherein the telecommunication exchange (2) incorporates or is connected to an authentication server (3) that is capable of performing authentication procedures, preferably for mono-modal or multi-modal biometric authentication, and that is capable of updating, storing, maintaining and comparing current trust levels (TLx, TLy) of calling parties and called parties according to given instructions and/or wherein the telecommunication exchange (2) incorporates or is connected to a call agent (22) that is capable of interacting with calling parties and/or called parties in order to obtain call information, that can be used for selecting a mode of communication.

14. Communication system according to claim 12 or 13, wherein the telecommunication exchange (2) incorporates or is connected to a local or central database (30, 300) that contains preferably in interrelated tables (30A, 30B, 30C, 30D), interrelated data such as
a) said data records with identification data related to the calling parties and the called parties
b) current trust levels (TLx, TLy) of at least a part of the calling parties or called parties;
c) required trust levels (TLRx; TLRy) of at least a part of the calling parties or called parties;
d) biometric data (B1x, ..., Bpx; B1y, ..., Bqy) for at least one biometric characteristic of at least a part of the calling parties or called parties;
e) individual communication rules (P1x, ..., Pnx; P1y, ..., Pmy) of at least a part of the calling parties or called parties;
f) global communication rules (P1x, ..., Pnx; P1y, ..., Pmy) for the calling parties and/or for called parties or groups thereof;
g) data records relating to the executed communications.

15. Communication system according to claim 13 or 14, comprising a plurality of public or private telecommunication exchanges (2) that have access to the common database (300).

## Patentansprüche

1. Verfahren zur vertrauenswürdigen Kommunikation in einem Kommunikationssystem, das eine Telekommunikationsvermittlungsstelle (2), wie eine Nebenstellenanlage, aufweist, die in Erwiderung auf eine von einem anrufenden Teilnehmer empfangene Verbindungsaufbauanforderung Vermittlungsfunktionen für den Aufbau einer Verbindung zwischen wenigstens einem ersten und einem zweiten Endgerät (1X, 1Y) zur Verfügung stellt, durch die die betreffenden Teilnehmer Transaktionen aushandeln und ausführen, wobei die Telekommunikationsvermittlungsstelle (2) eine Adresse des anrufenden Teilnehmers und/oder eine Adresse des angerufenen Teilnehmers, welche die Verbindungsaufbauanforderung betrifft, an einen Authentisierungs-Server (3) übermittelt;
der Authentisierungs-Server (3) wenigstens einen Datensatz für die Adresse des anrufenden Teilnehmers und/oder die Adresse des angerufenen Teilnehmers speichert;
der betreffende Datensatz enthaltend
a) wenigstens einen aktuellen Vertrauenslevel (TLx; TLy) zugeordnet zum anrufenden Teilnehmer und/oder zum angerufenen Teilnehmer, welcher Vertrauenslevel (TLx; TLy) zuvor durch Authentisierung des anrufenden Teilnehmers und/oder des angerufenen Teilnehmers bestimmt wurde; und
b) wenigstens einen geforderten Vertrauenslevel (TLRx; TLRy) zugeordnet zum anrufenden Teilnehmer und/oder zum angerufenen Teilnehmer;
der Authentisierungs-Server (3) den aktuellen Vertrauenslevel (TLx, TLy) des anrufenden Teilnehmers und/oder des angerufenen Teilnehmers mit dem wenigstens einen geforderten Vertrauenslevel (TLRx; TLRy) vergleicht; und
die Telekommunikationsvermittlungsstelle (2) die angeforderte Verbindung erstellt, falls der Authentisierungs-Server (3) gemeldet hat, dass der aktuelle Vertrauenslevel (TLx, TLy) den geforderten Vertrauenslevel (TLRx; TLRy) des anrufenden Teilnehmers und/oder des angerufenen Teilnehmers übertrifft.

2. Verfahren nach Anspruch 1, umfassend die Schritte, dass der zugehörige Datensatz wenigstens eine dem anrufenden Teilnehmer und/oder dem angerufenen Teilnehmer zugeordnete Kommunikationsvorschrift (P1x, ..., Pnx; P1y, ..., Pmy) enthält und der Authentisierungs-Server (3), basierend auf der empfangenen Adresse des anrufenden Teilnehmers und der Adresse des angerufenen Teilnehmers,
a) die zugehörige wenigstens eine Kommunikationsvorschrift (P1x, ..., Pnx; P1y, ..., Pmy) abruft;
b) den geforderten Vertrauenslevel (TLRx; TLRy) gemäss der Kommunikationsvorschrift (P1x, ..., Pnx; P1y, ..., Pmy) selektiert;
c) den aktuellen Vertrauenslevel (TLx, TLy) des anrufenden Teilnehmers und/oder des angerufenen Teilnehmers mit dem selektierten geforderten Vertrauenslevel (TLRx; TLRy) vergleicht; und
d) das Resultat des Vergleichs an die Telekommunikationsvermittlungsstelle (2) transferiert.

3. Verfahren nach Anspruch 1 oder 2, umfassend die Schritte, dass der Authentisierungs-Server (3)
a) Registrierungsprozeduren ausführt indem ein Anwender des Kommunikationssystem basierend auf präsentierten Benutzerinformationen authentisiert wird und biometrische Daten (B1x, ..., Bpx; B1y, ..., Bqy) für wenigstens eine biometrische Charakteristik erfasst werden und die erfassten biometrischen Daten (B1x, ..., Bpx; B1y, ..., Bqy) in einer Datenbank (30) gespeichert werden;
b) biometrische Daten des anrufenden Teilnehmers oder des angerufenen Teilnehmers online erfasst, um biometrische Authentisierungen durchzuführen; und
c) die erfassten biometrischen Daten mit aus der Datenbank (30) abgerufenen biometrischen Daten (B1x, ..., Bpx; B1y, ..., Bqy) vergleicht und prüft ob die biometrischen Daten einander entsprechen.

4. Verfahren nach Anspruch 1, 2 oder 3, umfassend die Schritte, dass der Authentisierungs-Server (3)
a) einen oder mehrere Datensätze für eine Adresse eines anrufenden Teilnehmers oder eine Adresse eines angerufenen Teilnehmers speichert, von denen jeder für die Authentisierung erforderliche Informationen enthält, wie biometrische Daten und der aktuelle Vertrauenslevel (TLx) eines potentiellen Anwenders, der die genannte Adresse des anrufenden Teilnehmers oder die Adresse des angerufenen Teilnehmers verwendet;
b) einen Nachweis empfängt, wie online vom Anwender erfasste biometrische Daten;
c) den Anwender identifiziert; und
d) falls von der Kommunikationsvorschrift (P1x, ..., Pnx) gefordert, den aktuellen Vertrauenslevel (TLx) des identifizierten Anwenders mit dem zugehörigen geforderten Vertrauenslevel (TLRx; TLRy) vergleicht.

5. Verfahren nach einem der Ansprüche 1 - 4, umfassend die Schritte, dass der Authentisierungs-Server (3) den anrufenden Teilnehmer und/oder den angerufenen Teilnehmer authentisiert
a) bevor der Verbindungsaufbau erfolgt oder während einer Zeitperiode, in der die Verbindung aufgebaut wird, oder
b) falls der aktuelle Vertrauenslevel (TLx, TLy) unterhalb des geforderten Vertrauenslevels (TLRx; TLRy) liegt.

6. Verfahren nach einem der Ansprüche 1 - 5, wobei Kommunikationsvorschriften (P1x, ..., Pnx; P1y, ..., Pmy) für ankommende und ausgehende Anrufe definiert werden.

7. Verfahren nach einem der Ansprüche 1 - 6, umfassend die Schritte, dass der aktuelle Vertrauenslevel (TLx, TLy) zusammen mit einem Zeitstempel bestimmt wird und der aktuelle Vertrauenslevel (TLx, TLy) gemäss entsprechend vorbestimmten Werten reduziert wird, die den erwarteten Verlust an Vertrauen im Laufe der Zeit repräsentieren.

8. Verfahren nach einem der Ansprüche 1-7, umfassend die Schritte, dass der anrufende Teilnehmer und/oder der angerufenen Teilnehmer individuelle Kommunikationsvorschriften (P1x, ..., Pnx; P1y, ..., Pmy) selektieren und speichern und/oder dass ein Systemoperator globale Kommunikationsvorschriften (P1x, ..., Pnx; P1y, ..., Pmy) für die anrufenden Teilnehmer und/oder die angerufenen Teilnehmer oder Gruppen davon selektiert und speichert.

9. Verfahren nach einem der Ansprüche 1 - 8, umfassend die Schritte, dass die Telekommunikationsvermittlungsstelle (2) zur Interaktion mit dem anrufenden Teilnehmer und/oder dem angerufenen Teilnehmers einen Rufagenten (22) verwendet, um Anrufinformationen zu ermitteln, einschliesslich wenigstens eines der folgenden Informationselemente oder Kombinationen davon
a) eine Anforderung für vertrauliche Kommunikation; oder
b) eine Anforderung für dokumentierte Kommunikation; oder
c) eine Anforderung für vertragliche Kommunikation; oder
d) eine Anforderung für zertifizierte Kommunikation; oder
e) eine Anforderung für unverbindliche Kommunikation; oder
f) Transaktionsdaten, insbesondere Transaktionswerte;
und entsprechende Selektierung von Kommunikationsvorschriften (P1x, ..., Pnx; P1y, ..., Pmy).

10. Verfahren nach einem der Ansprüche 1 - 9, umfassend die Schritte, dass dem aufgebauten Anruf zugehörige Daten aufgenommen werden, einschliesslich wenigstens eines der folgenden Informationselemente oder Kombinationen davon
a) Zeit und Datum;
b) den Typ der Kommunikation;
c) die am Anruf teilnehmenden Teilnehmer, vorzugsweise mit Name, Funktionsrang, Arbeitgeber, Berechtigung und Ort;
d) den Gegenstand des Anrufs, wie die betreffende Transaktion oder den Vertrag;
e) die ausgetauschten Daten, wie Daten betreffend die schriftliche oder mündliche Kommunikation; und/oder
f) die elektronischen Signaturen wenigstens eines Teilnehmers.

11. Verfahren nach einem der Ansprüche 1 - 10, umfassend die Schritte, dass zertifizierte oder nicht-zertifizierte Kommunikationsrapporte auf Antrag eines Teilnehmers, der an der vertraulichen Kommunikation teilgenommen hat, oder einer rechtlichen Instanz archiviert und ausgegeben werden.

12. Kommunikationssystem mit einer Telekommunikationsvermittlungsstelle (2), wie einer Nebenstellenanlage mit einer Steuereinheit (20) und einer Durchschalteeinheit (21), welche, in Erwiderung auf eine von einem anrufenden Teilnehmer empfangene Verbindungsaufbauanforderung Anrufsteuerfunktionen und Schaltfunktionen für den Aufbau einer Verbindung zwischen wenigstens einem ersten und einem zweiten Endgerät (1X, 1Y) zur Verfügung stellen, durch die die betreffenden Teilnehmer Transaktionen verhandeln und ausführen, welches Kommunikationssystem dazu ausgelegt ist, gemäss einem Verfahren zu arbeiten, dass in einem der Ansprüche 1 - 11 definiert ist.

13. Kommunikationssystem nach Anspruch 12, wobei die Telekommunikationsvermittlungsstelle (2) einen Authentisierungs-Server (3) umfasst oder damit verbunden ist, der zur Durchführung von Authentisierungs- Prozeduren fähig ist, vorzugsweise für die mono-modale oder multimodale biometrische Authentisierung, und der zur Aktualisierung, Speicherung, Aufrechterhaltung und zum Vergleich aktueller Vertrauenslevel (TLx, TLy) von anrufenden Teilnehmern und angerufenen Teilnehmern gemäss gegebenen Instruktionen fähig ist und/oder dass die Telekommunikationsvermittlungsstelle (2) einen Rufagenten (22) umfasst oder damit verbunden ist, der mit anrufenden Teilnehmern und/oder angerufenen Teilnehmern interagieren kann, um Anrufinformationen zu ermitteln, die für die Selektion eines Kommunikationsmodus verwendbar sind.

14. Kommunikationssystem nach Anspruch 12 oder 13, wobei die Telekommunikationsvermittlungsstelle (2) eine lokale oder zentrale Datenbank (30, 300) umfasst oder damit verbunden ist, die, vorzugsweise in zusammenhängenden Tabellen (30A, 30B, 30C, 30D), zusammenhängende Daten aufweist, wie
a) die genannten Datensätze mit Identifikationsdaten betreffend die anrufenden Teilnehmer und die angerufenen Teilnehmer;
b) aktuelle Vertrauenslevel (TLx, TLy) wenigstens eines der anrufenden Teilnehmer oder angerufenen Teilnehmer;
c) geforderte Vertrauenslevel (TLRx; TLRy) für wenigstens einen Teil der anrufenden Teilnehmer oder angerufenen Teilnehmer;
d) biometrische Daten (B1x, ..., Bpx; B1y, ..., Bqy) für wenigstens eine biometrische Charakteristik für wenigstens einen Teil der anrufenden Teilnehmer oder angerufenen Teilnehmer;
e) individuelle Kommunikationsvorschriften (P1x, ..., Pnx; P1y, ..., Pmy) für wenigstens einen Teil der anrufenden Teilnehmer oder angerufenen Teilnehmer;
f) globale Kommunikationsvorschriften (P1x, ..., Pnx; P1y, ..., Pmy) für anrufende Teilnehmer oder angerufene Teilnehmer oder Gruppen davon;
g) Datensätze betreffend die ausgeführten Kommunikationen.

15. Kommunikationssystem nach Anspruch 13 oder 14, mit einer Vielzahl von öffentlichen oder privaten Telekommunikationsvermittlungsstellen (2), die Zugang zu einer gemeinsamen Datenbank (300) haben.

## Revendications

1. Procédé pour la communication fiable dans un système de communication comprenant un central de télécommunication (2), tel qu'un central téléphonique privé, qui, en réponse à une requête d'établissement d'appel d'un participant appelant, fournit des fonctions de commutation pour établir une connexion d'appel entre au moins un premier et un deuxième terminal (1X, 1Y) à travers lequel les participants négocient et exécutent des transaction,
le central de télécommunication (2) transmettant une adresse, qui est relié à la requête d'établissement d'appel, du participant appelant et/ou du participant appelé à un serveur d'authentification (3);
le serveur d'authentification (3) sauvegardant au moins un bloc de données pour l'adresse du participant appelant et/ou l'adresse du participant appelé;
le bloc de données correspondant comprenant
a) au moins un niveau de fiabilité actuel (TLx; TLy) attribué au participant appelant et/ou au participant appelé, quel niveau de fiabilité (TLx; TLy) avait été déterminé avant en authentifiant le participant appelant et/ou le participant appelé;
b) au moins une niveau de fiabilité (TLRx; TLRy) demandé attribué au participant appelant et/ou au participant appelé;
le serveur d'authentification (3) comparant le niveau de fiabilité actuel (TLx, TLy) du participant appelant et/ou du participant appelé avec le au moins un niveau de fiabilité demandé (TLRx; TLRy); et
le central de télécommunication (2) établissant la connexion d'appel demandée, si le serveur d'authentification (3) a répondu que le niveau de fiabilité actuel (TLx, TLy) dépasse le niveau de fiabilité demandé (TLRx; TLRy) du participant appelant et/ou du participant appelé.

2. Procédé selon la revendication 1, comprenant les étapes que le bloc de données correspondant comprenant au moins une règle de communication (P1x, ..., Pnx; P1y, ..., Pmy) attribuée au participant appelant et/ou au participant appelé et que le serveur d'authentification (3), basé sur l'adresse du participant appelant et l'adresse du participant appelé reçus,
a) extrait la au moins une règle de communication (P1x, ..., Pnx; P1y, ..., Pmy) correspondante;
b) sélectionne le niveau de fiabilité demandé (TLRx; TLRy) selon la règle de communication (P1x, ..., Pnx; P1y, ..., Pmy) ;
c) compare le niveau de fiabilité actuel (TLx, TLy) du participant appelant et/ou du participant appelé au niveau de fiabilité demandé (TLRx; TLRy); et
d) transmet le résultat de la comparaison au central de télécommunication (2).

3. Procédé selon la revendication 1 ou 2, comprenant les étapes que le serveur d'authentification (3)
a) exécute des procédures de registration en authentifiant un participant du système de communication basé sur des identifiants fournis et saisit des données biométriques (B1x, ..., Bpx; B1y, ..., Bqy) pour au moins une caractéristique biométrique et sauvegarde les données biométriques saisies (B1x, ..., Bpx; B1y, ..., Bqy) dans une base de données (30);
b) saisit en ligne des données biométriques du participant appelant ou du participant appelé pour établir une authentification biométrique; et
c) compare les données biométriques saisies à des données biométriques (B1x, ..., Bpx; B1y, ..., Bqy) extraits de la base de données (30) et vérifiant si les données biométriques se correspondent.

4. Procédé selon la revendication 1, 2 ou 3, comprenant les étapes que le serveur d'authentification (3)
a) sauvegarde un ou plusieurs blocs de données pour une adresse du participant appelant ou une adresse du participant appelé, chacune comprenant des informations nécessaires pour l'authentification, tel que des données biométriques et le niveau de fiabilité actuel (TLx) d'un utilisateur potentiel qui utilise l'adresse du participant appelant ou du participant appelé;
b) reçoit une preuve, tel que des données biométriques, saisit de l'utilisateur en ligne;
c) identifie l'utilisateur; et
d) si demandé par les règles de communication (P1x, ..., Pnx), compare le niveau de fiabilité actuel (TLx) de l'utilisateur identifié avec le niveau de fiabilité demandé (TLRx; TLRy).

5. Procédé selon une des revendications 1 - 4, comprenant les étapes que le serveur d'authentification (3) authentifiant le participant appelant et/ou le participant appelé
a) avant d'établir une connexion d'appel ou pendant la période durant laquelle la connexion est établie, ou
b) si le niveau de fiabilité (TLx, TLy) est au-dessous du niveau de fiabilité demandé (TLRx; TLRy).

6. Procédé selon une des revendications 1 - 5, des règles de communication (P1x, ..., Pnx; P1y, ..., Pmy) étant définis pour des appels entrants et sortants.

7. Procédé selon une des revendications 1 - 6, comprenant les étapes de déterminer le niveau de fiabilité (TLx, TLy) actuel ensemble avec un horodatage et réduire le niveau de fiabilité (TLx, TLy) actuel selon des valeurs prédétermines représentant la perte de fiabilité avec le temps.

8. Procédé selon une des revendications 1-7, comprenant les étapes du participant appelant et/ou de participant appelé sélectionnant et sauvegardant des règles de communication (P1x, ..., Pnx; P1y, ..., Pmy) individuelles et/ou un opérateur du système sélectionnant et sauvegardant des règles de communication (P1x, ..., Pnx; P1y, ..., Pmy) globales pour des participants appelants et/ou pour des participants appelés ou pour des groupes des ceux participants.

9. Procédé selon une des revendications 1 - 8, comprenant les étapes que le central de télécommunication (2) utilise un agent d'appel (22) pour interagir avec le participant appelant et/ou le participant appelé pour obtenir de l'information, incluant au moins un des éléments d'informations suivants ou une combinaison de ces éléments:
a) une demande pour une communication fiable; ou
b) une demande pour une communication documentée; ou
c) une demande pour une communication contractuelle; ou
d) une demande pour une communication certifiée; ou
e) une demande pour une communication non-contraignante; ou
f) des données de transaction, en particulier des valeurs de transaction;
et sélectionner des règles de communication (P1x, ..., Pnx; P1y, ..., Pmy) en fonction de cette information.

10. Procédé selon une des revendications 1 - 9, comprenant les étapes d'enregistrer des données reliées à l'appel établi, incluant au moins un des éléments d'informations suivants ou une combinaison de ces éléments:
a) heure et date;
b) le type de communication;
c) les participants participant à l'appel, de préférence avec leur nom, fonction, employeur, droits d'accès et endroit;
d) le sujet de l'appel tel que la transaction ou le contrat concerné;
e) les données échangées, tel que des données reliées à la communication orale ou écrite; et/ou
f) la signature électronique d'au moins un participant.

11. Procédé selon une des revendications 1 - 10, comprenant les étapes d'archiver et d'émettre des rapports de communication certifié ou non-certifié sur demande d'un participant qui a participé à la communication fiable ou par une autorité juridique.

12. Système de communication avec un central de télécommunication (2), tel qu'un central téléphonique privé avec une unité de contrôle d'appel (20) et une unité de commutation (21), qui, en réponse à une requête d'établissement d'appel d'un participant appelant, fournit des fonctions de commutation pour établir une connexion d'appel entre au moins un premier et un deuxième terminal (1X, 1Y) à travers lequel les participants négocient et exécutent des transaction, ledit système de communication étant conçu de manière à opérer selon le procédé défini dans une des revendications 1-11.

13. Système de communication selon la revendication 12, le central de télécommunication (2) incorporant ou étant connecté à un serveur d'authentification (3) qui est capable à exécuter des procédures d'authentification, de préférence pour l'authentification biométrique monomodale ou multimodale, et qui est capable de mettre à jour, sauvegarder, maintenir et comparer des niveaux de fiabilité actuels (TLx, TLy) de participants appelants et de participants appelés selon des instructions fournis et/ou le central de télécommunication (2) incorporant ou étant connecté à un agent d'appel (22) qui est capable d'interagir avec des participants appelant et/ou des participants appelés pour obtenir des informations sur l'appel, qui peut être utilisé pour sélectionner un mode de communication.

14. Système de communication selon la revendication 12 ou 13, le central de télécommunication (2) incorporant ou étant connecté à une base de données locale ou centrale (30, 300) qui contient, de préférence dans des tableaux inter-reliés (30A, 30B, 30C, 30D), des données inter-reliés, tel que
a) lesdits blocs de données avec des données d'identification relies aux participants appelants et au participants appelés;
b) les niveaux de fiabilité actuels (TLx, TLy) d'au moins une partie des participants appelants ou des participants appelés;
c) les niveaux de fiabilité demandés (TLRx; TLRy) d'au moins une partie des participants appelants ou des participants appelés;
d) des données biométriques (B1x, ..., Bpx; B1y, ..., Bqy) d'au moins une caractéristique biométrique d'au moins une partie des participants appelants ou des participants appelés;
e) des règles de communication individuels (P1x, ..., Pnx; P1y, ..., Pmy) d'au moins une partie des participants appelants ou des participants appelés;
f) des règles de communication globales (P1x, ..., Pnx; P1y, ..., Pmy) des participants appelants et/ou des participants appelés ou pour des groupes des ceux participants;
g) des blocs de données relies à la communication accomplie.

15. Système de communication selon la revendication 13 ou 14, comprenant une pluralité de centrales de télécommunication (2) publiques ou privés qui ont accès à la base de données commune (300).
